# EUROPÄISCHE PATENTSCHRIFT

(11) **EP 2 524 752 B1**
(45) Veröffentlichungstag und Bekanntmachung des Hinweises auf die Patenterteilung: **18.03.2020**
(21) Anmeldenummer: 12003768.4
(22) Anmeldetag: 11.05.2012
(51) Int. Cl.: B23B 31/08, B23B 51/10

(54) **Entgratwerkzeughalter**
De-burring tool holder
Support pour outil d'ébavurage

(30) Priorität: 16.05.2011 DE 202011100749 U
(43) Veröffentlichungstag der Anmeldung: 21.11.2012
(73) Patentinhaber: GBZ Mannheim GmbH & Co. KG, 67227 Frankenthal (DE)
(72) Erfinder: Born, Reinhold, 67227 Frankenthal (DE)
(74) Vertreter: Busch, Tobias

(56) Entgegenhaltungen:
- EP-A1- 2 422 906
- WO-A1-2005/049254
- WO-A1-2006/010093
- DE-A1- 10 354 474
- DE-B3-102004 008 871
- DE-U1- 20 208 438
- GB-A- 613 788
- JP-A- 60 131 106
- SU-A1- 1 281 347
- US-A- 2 804 789

## Beschreibung

Die Erfindung betrifft einen einen Entgratwerkzeughalter gemäß dem Oberbegriff des Anspruchs 1. Ein solcher Entgratwerkzeughalter ist aus der DE 202 08 438 U1 bekannt.

Ein Entgratwerkzeug wird zum Entfernen eines Grates bei Bohrungen eingesetzt. Eine Anwendung ist beispielsweise das Entgraten von Bohrungen bei Common-Rail-Systemen. Der Kraftstoff-Hochdruckspeicher, den man auch als Common-Rail bezeichnet, wird aus einem zylindrischen Metallkörper gefertigt, in den eine Längsbohrung zur Bildung des Innenraums für den Kraftstoff eingebracht wird. Die Mantelfläche des Körpers wird mit mehreren Radialbohrungen zum Anschluss der Einspritzventile versehen. Dabei entsteht im Innenraum des Kraftstoff-Hochdruckspeichers an jeder Radialbohrung ein Grat, der entfernt werden muss.

Zum Entgraten werden Werkzeuge eingesetzt, die zunächst durch die jeweilige Radialbohrung durchgeführt werden und dann im Innenraum des Kraftstoff-Hochdruckspeichers den Grat mittels eines rotierenden Entgratwerkzeugs entfernen. Vorzugsweise handelt es sich bei den Entgratwerkzeugen um Entgratmesser. Das Entgratmesser muss zunächst beim Eintauchen in die Bohrung radial nach innen nachgeben und federt dann nach Durchtritt wieder radial nach außen zurück. Die Schneide des Entgratmessers hintergreift den Bohrungsrand und entfernt rotierend den Grat. Da dieser Arbeitsschritt bei Umkehr der Vorschubrichtung erfolgt, wird dieser Arbeitsschritt auch als Rückwärtsentgraten bezeichnet. Das gattungsgemäße Werkzeug kann prinzipiell sowohl vorwärts als auch rückwärts entgraten.

In der DE 103 57 404 B4 wird ein Entgratsystem beschrieben bei dem das Entgratwerkzeug als Entgratmesser ausgeführt ist. Das Entgratwerkzeug ist in einem vorderen Teil eines Entgratwerkzeughalters befestigt. Der vordere Teil ist schwenkbar in einem hinteren Teil gelagert, der in eine Werkzeugmaschine eingespannt wird. Beim Eintauchen in die Bohrung schwenkt das Entwerkzeug um einen Drehpunkt.

Die DE 694 23 041 T1 beschreibt ein Entgratsystem, bei dem ein als Entgratmesser ausgeführtes Entgratwerkzeug in einem Schaft mit einer Längsausnehmung schwenkbar gelagert ist und auf diese Weise eine Ausweichbewegung ausführen kann.

In der DE 103 33 194 B4 wird ein Entgratsystem beschrieben, die eine Führungshülse aufweist in der sich ein Grundkörper befindet, der mit einer Messernut versehen ist. Das als Entgratmesser ausgeführte Entgratwerkzeug schwenkt um einen Querstift in der Messernut.

Die US 2009/0304470 A1 beschreibt ebenfalls ein Entgratsystem bei dem als Entgratwerkzeug ein Entgratmesser eingesetzt wird, das um einen festen Drehpunkt schwenkt. Die schwenkbewegliche Aufhängung des Entgratmessers führt dazu, dass sich die Winkellage der Schneide des Entgratmessers und damit die Geometrie des entgrateten Bohrungsrandes in Abhängigkeit des Schwenkwinkels ändern.

Die DE 202 08438 U1 beschreibt eine Einrichtung zum Entgraten einer exzentrisch angeordneten Bohrung. Dabei ist der Schaft eines Entgratwerkzeugs in der Aufnahmebohrung einer Kugel angeordnet. In den Umfang der Kugel sind drei jeweils um 120 ° gegeneinander versetzte schalenförmige Aufnahmen für eine Rastkugel eingebracht. Die Rastkugeln werden mit Spiraldruckfedern in die Aufnahmen gedrückt.

Die US 2 804 789 A beschreibt ein Entgratwerkzeug mit Spiralfedern, die eine Schneide gegenein Werkstück drücken.

In der DE 103 54 474 A1 wird ein Werkzeug mit einem kraftgesteuerten Ausweichmechanismus beschrieben. Dabei werden pneumatische Kolben oder druckbeaufschlagte Schläuche als Rückstellmittel eingesetzt.

Die JP 60 131106 A beschreibt ein Entgratwerkzeug, das mit Druckzylindern arbeitet.

Bei Common-Rail-Systemen kann es beispielsweise vorkommen, dass die Längsbohrung, zur Bildung des Innenraums, nicht genau zentrisch im Kraftstoff-Hochdruckspeicher verläuft. Werden Bohrungen für den Anschluss der Einspritzventile an der Mantelfläche eingebracht, so kann dies dazu führen, dass einzelne Bohrungen nicht radial zum Innenraum ausgerichtet sind. Je nach Bohrungsverlauf kann mit herkömmlichen Entgratsystemen eine verlässliche Entfernung des Grates nicht gewährleistet werden.

Vor diesem technologischen Hintergrund liegt der Erfindung die Aufgabe zugrunde, einen Entgratwerkzeughalter mit den eingangs beschriebenen Merkmalen bereit zu stellen, mit denen eine zuverlässige Entfernung eines Grates gewährleistet wird. Dabei soll einerseits beim Eintauchen in eine Bohrung eine Ausweichbewegung ermöglicht werden und andererseits nach Durchtritt durch die Bohrung eine ausreichende Anpresskraft zum Entgraten erzeugt werden, wobei eine gleichmäßige Geometrie der entgrateten Durchtrittsöffnung gewährleistet werden soll.

Diese Aufgabe wird erfindungsgemäß durch ein Entgratwerkzeughalter gemäß dem Anspruch 1 gelöst.

Erfindungsgemäß führt das Entgratwerkzeug beim Ausweichen und Zurückfedern keine Schwenkbewegung um einen festen Drehpunkt durch, sondern eine Verschiebung in radialer Richtung zur Drehachse. Dabei handelt es sich vorzugsweise um eine reine Parallelverschiebung. Wird als Entgratwerkzeug ein Entgratmesser eingesetzt, so behält die Schneide des Entgratmessers ihre Lage relativ zur Drehachse bei. Dadurch wird eine gleich bleibende Entgratungsgeometrie der Bohrungsöffnung gewährleistet.

Ermöglicht wird dies dadurch, dass der vordere Teil des Halters zwischen mindestens zwei Federelementen gehalten wird. Das Entgratwerkzeug ist am vorderen Teil des Halters befestigt und ragt in axialer Richtung nach vorne. Die Federelemente sind an zwei einander gegenüberliegenden Seiten der Befestigungsstelle angeordnet. Zur sprachlichen Vereinfachung der Beschreibung wird, trotz der Rotationsbewegung des Werkzeugs, im Folgenden von einer Anordnung "oberhalb" und "unterhalb" der Befestigungsstelle gesprochen, wobei damit immer eine radiale Lageangabe beschrieben wird.

Bei einer Variante der Erfindung erstrecken sich die Federelemente in axialer Richtung und sind parallel zur Drehachse angeordnet. Vorzugsweise weisen die Federelemente einen konstanten Rechteckquerschnitt auf und stellen eine Verbindung zwischen dem vorderen und dem hinteren Teil her. Da der hintere Teil des Halters fest eingespannt ist, bilden das obere und untere Federelement bei radialer Verschiebung des vorderen Teils jeweils eine Biegefeder. Zwei parallel zueinander angeordnete Biegefedern bezeichnet man als Parallelfeder [Dubbel, Taschenbuch für den Maschinenbau, 22. Auflage, 2007, Seite G50].

Durch Anordnung des vorderen Teils zwischen einer Parallelfeder wird eine radiale Parallelverschiebung des vorderen zum hinteren Teil ermöglicht. Wird ein Entgratmesser als Entgratwerkzeug eingesetzt, so wird die Winkellage der Schneide des Entgratmessers relativ zur Drehachse beibehalten.

Bei einer alternativen Variante der Erfindung ist oberhalb und unterhalb der Befestigungsstelle des Entgratwerkzeugs jeweils ein mehrfach gebogener Streifen angeordnet. Durch die Biegung entstehen plattenartige Federelemente, die mit Bögen untereinander verbunden sind und eine Federung bilden. Die einzelnen Federelemente jeder Federung sind parallel zueinander ausgerichtet und können sich in radialer Richtung ziehharmonikaartig zueinander bewegen.

Vorzugsweise bestehen die Streifen aus dem die Federungen gebildet werden aus einem Federstahl. Der vordere Teil des Entgratwerkzeughalters wird zwischen diesen parallel zueinander federnden Elementen gehalten. Sie ermöglichen eine radiale Parallelverschiebung des vorderen Teils zum fest eingespannten hinteren Teil. Auch bei dieser Konstruktion wird die Winkellage des Entgratwerkzeugs relativ zur Drehachse beibehalten, so dass auch bei unterschiedlich starken radialen Auslenkungen eine gleich bleibende Schnittgeometrie gewährleistet wird.

Bei einer besonders vorteilhaften Ausführung der Erfindung ist der Entgratwerkzeughalter einstückig ausgebildet. Der hintere Teil, der vordere Teil und die Federelemente werden aus einem Materialstück gefertigt. Vorzugsweise besteht das Materialstück aus einem Kunststoff. Dabei eignen sich beispielsweise Kunststoffe aus einem Polyvinylchlorid (PVC), einem Polycarbonat (PC) oder einem Polyamid, insbesondere einem Polycaprolactam (PA 6).

Das Entgratwerkzeug ist an einer Befestigungsstelle mit dem vorderen Teil des Entgratwerkzeughalters verbunden. An der Befestigungsstelle kann eine Bohrung in den vorderen Teil eingebracht sein, in die das Entgratwerkzeug gesteckt und mittels einer Feststellschraube in seiner gewünschten Position fixiert wird.

Zum Entgraten muss das vordere Ende des Entgratwerkzeugs, also beispielsweise die Schneide eines Entgratmessers, mit einer ausreichenden Anpresskraft gegen den zu entgratenden Bohrungsrand gedrückt werden. Zur Erzeugung einer Anpresskraft ist die Befestigungsstelle exzentrisch zur Drehachse angeordnet. Dadurch erstreckt sich auch das Entgratwerkzeug in axialer Richtung exzentrisch zur Drehachse. Je stärker die Exzentrizität ausgeprägt ist, desto stärker federt das Entgratwerkzeug nach Durchtritt durch die Bohrung radial nach außen zurück und desto höher ist die Anpresskraft mit der das vordere Ende des Entgratwerkzeugs am Material anliegt.

Die erforderliche Anpresskraft hängt unter anderem von dem zu bearbeitenden Material ab. Dabei ist es wünschenswert, die Anpresskraft variieren zu können. Daher ist bei der Erfindung die radiale Position des vorderen Teils veränderbar.

Bei einer Variante der Erfindung erfolgt die Veränderung der radialen Position entlang einer linearen Führungslinie. Dabei eignet sich insbesondere eine Gleitführung, vorzugsweise in Form einer Schwalbenschwanzführung oder T-Nut-Führung. Mittels eines verdrehbaren Einstellelements ist der vordere Teil mitsamt den Federelementen radial zur Drehachse in seiner Position entlang der Gleitführung verschiebbar.

Erfindungsgemäß erfolgt die Veränderung der radialen Position des vorderen Teils dadurch, dass ein Verstellelement hinein bzw. heraus gedreht wird, das über ein Kraftübertragungselement auf den vorderen Teil drückt und dadurch dessen Position radial zur Drehachse verändert. Bei dem Kraftübertragungselement handelt es sich vorzugsweise um eine Druckfeder, die beispielsweise als Spiralfeder oder als ein Paket von Tellerfedern ausgeführt sein kann. Deren Federkraft wird durch Verdrehung einer Einstellschraube variiert.

Die Erfindung umfasst weiterhin ein Entgratsystem gemäß dem Anspruch 9.

Bei einer besonders vorteilhaften Ausführung der Erfindung ist das Entgratwerkzeug als Entgratmesser ausbildet ist, wobei das Entgratmesser einen Schneidenträger umfasst, an dessen vorderem Ende eine Schneide angeordnet ist.

Bei einer Variante der Erfindung sind der Schneidenträger und der Entgratwerkzeughalter einstückig ausgebildet. Mit der einstückigen Ausbildung entfallen aufwendige Passungen der zu einem Entgratsystem verbundenen Teile.

Weitere Merkmale und Vorteile der Erfindung ergeben sich aus der Beschreibung von Ausführungsbeispielen, anhand von Zeichnungen und aus den Zeichnungen selbst.

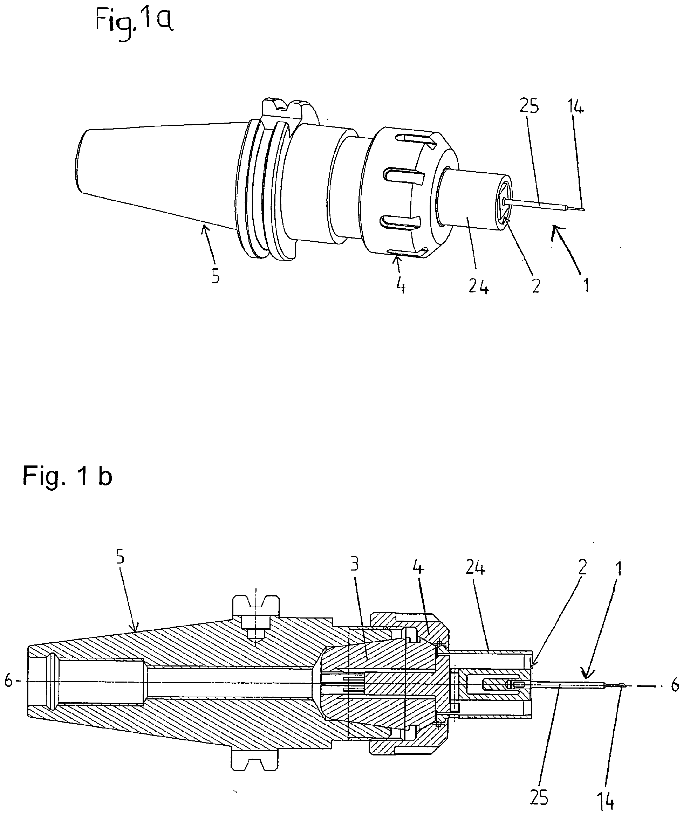

Dabei zeigt
- Fig. 1 a: eine perspektivische Darstellung eines Entgratsystems mit Werkzeugaufnahme,
- Fig. 1 b: eine Schnittdarstellung eines Entgratwerksystems mit Werkzeugaufnahme,
- Fig. 2 a: eine Seitenansicht eines Entgratwerkzeughalters mit Parallelfeder,

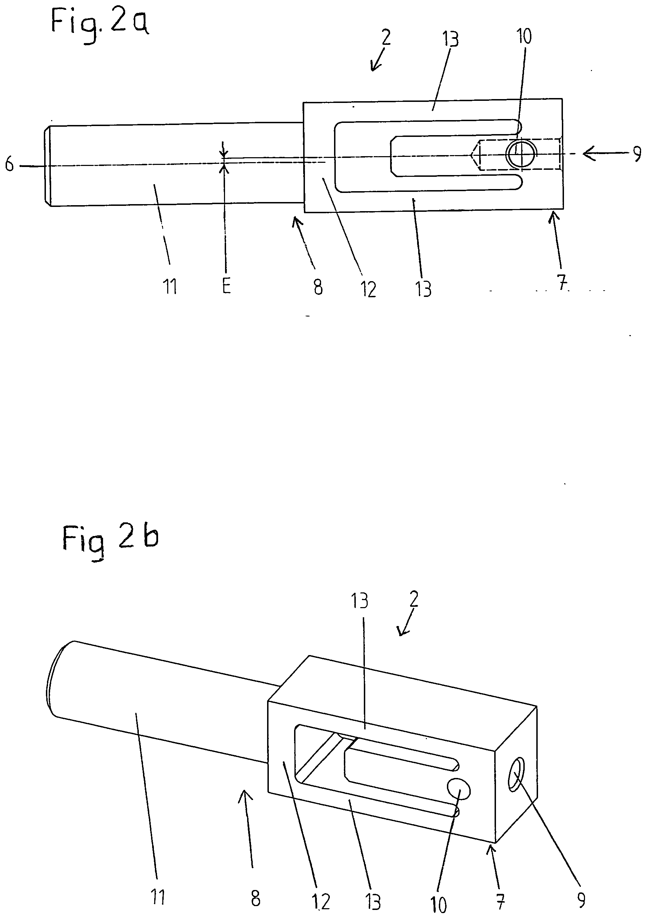

- Fig. 2 b: eine perspektivische Darstellung eines Entgratwerkzeughalters mit Parallelfeder,

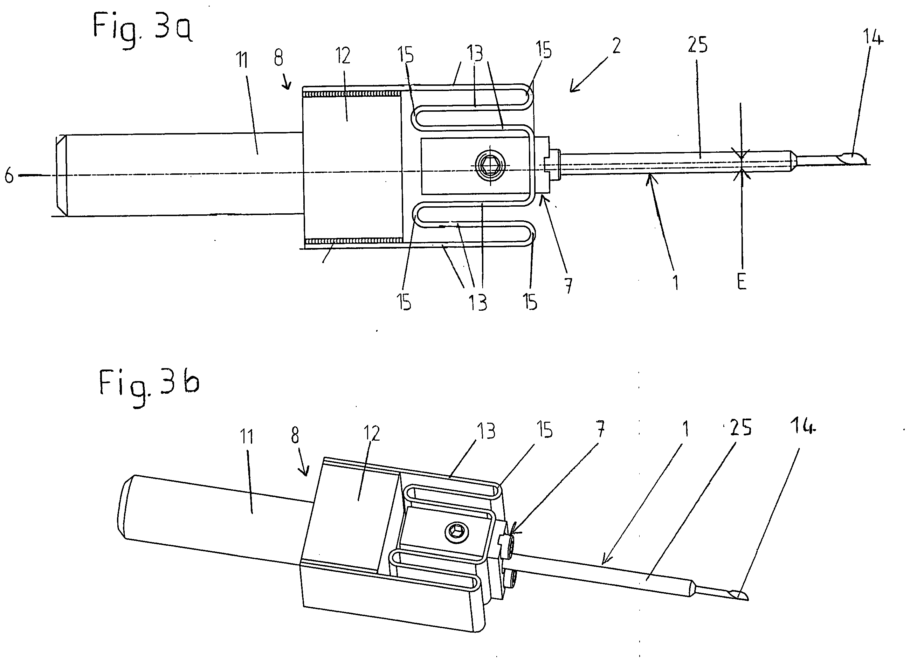

- Fig. 3 a: eine Seitenansicht eines Entgratwerkzeughalters zwei gebogenen Streifen als Federung,
- Fig. 3 b: eine perspektivische Darstellung eines Entgratwerkzeughalters mit zwei gebogenen Streifen als Federung,

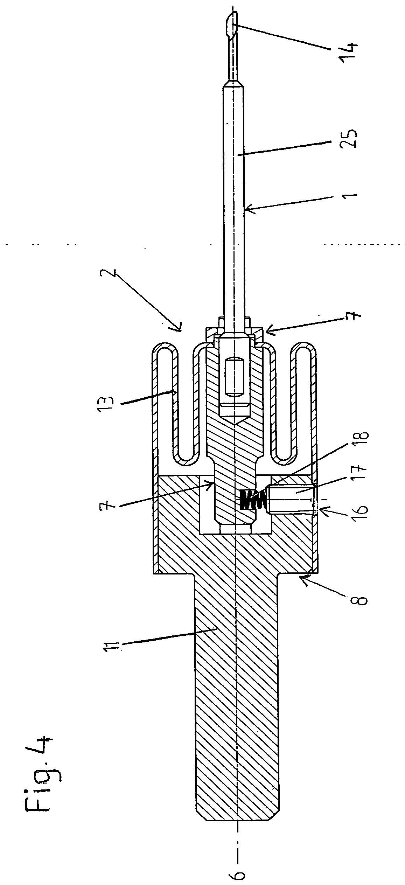

- Fig. 4: eine Schnittdarstellung eines radial verstellbaren Entgratwerkzeughalters mit angeschweißten Federelementen,

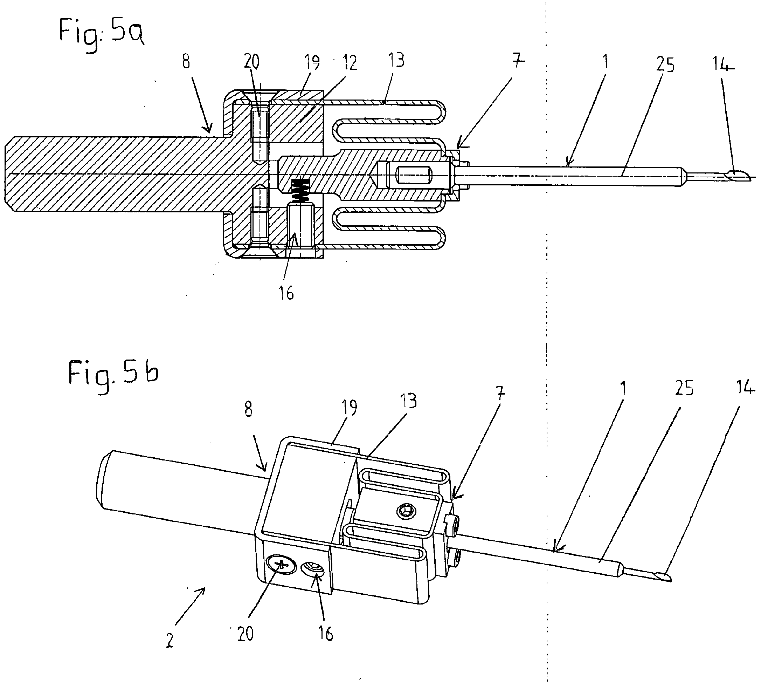

- Fig. 5 a: eine Schnittdarstellung eines radial verstellbaren Entgratwerkzeughalters mit einer U-Profil Befestigung der Federelemente,
- Fig. 5 b: eine perspektivische Darstellung eines radial verstellbaren Entgratwerkzeughalters mit U-Profil Befestigung der Federelemente,

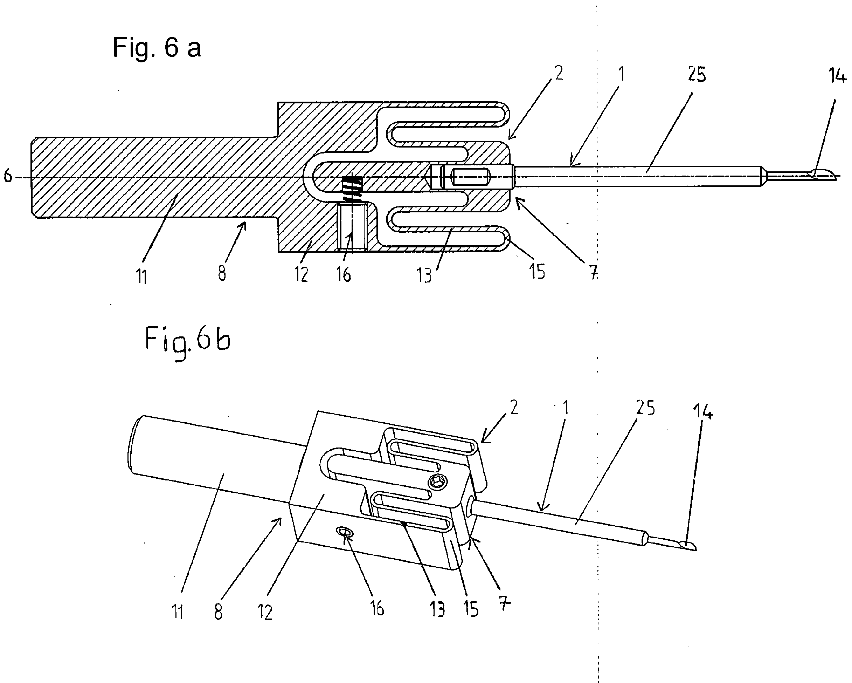

- Fig. 6 a: eine Schnittdarstellung eines radial verstellbaren Entgratwerkzeugshalters in einstückiger Ausführung,
- Fig. 6 b: eine perspektivische Darstellung eines radial verstellbaren Entgratwerkzeugshalter in einstückiger Ausführung,

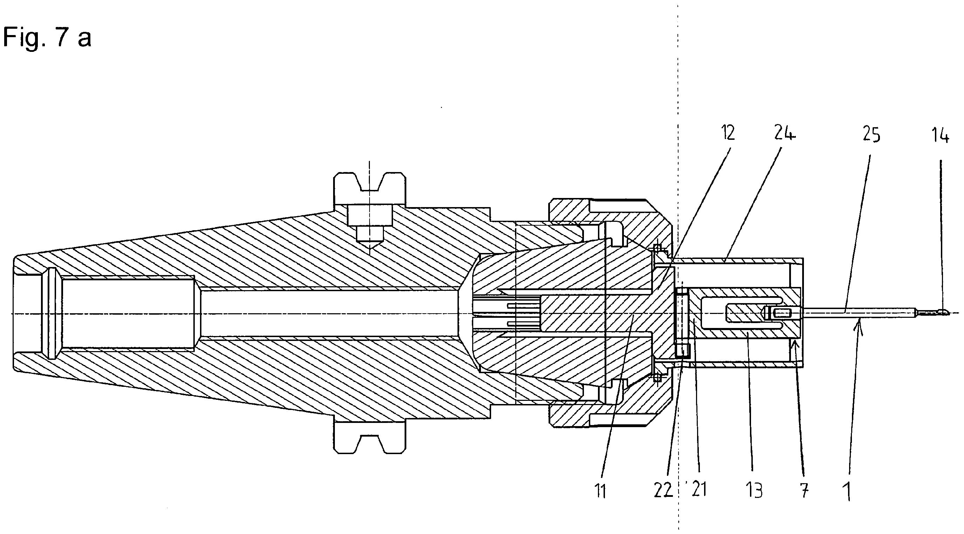

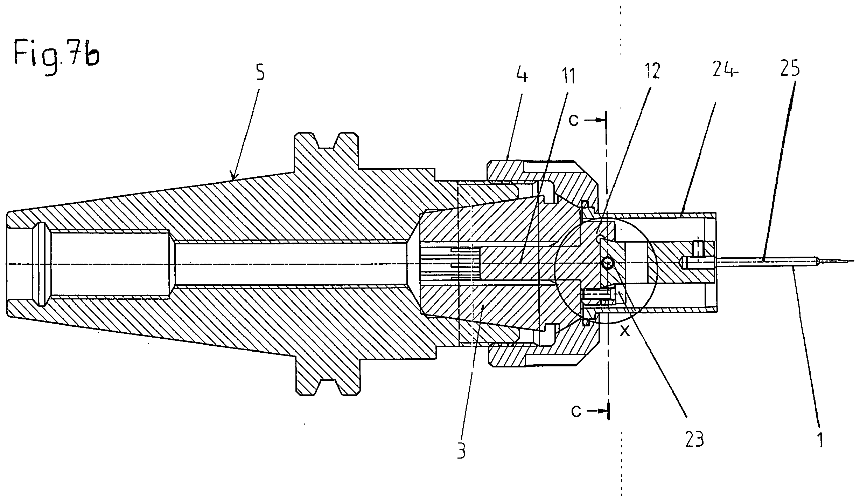

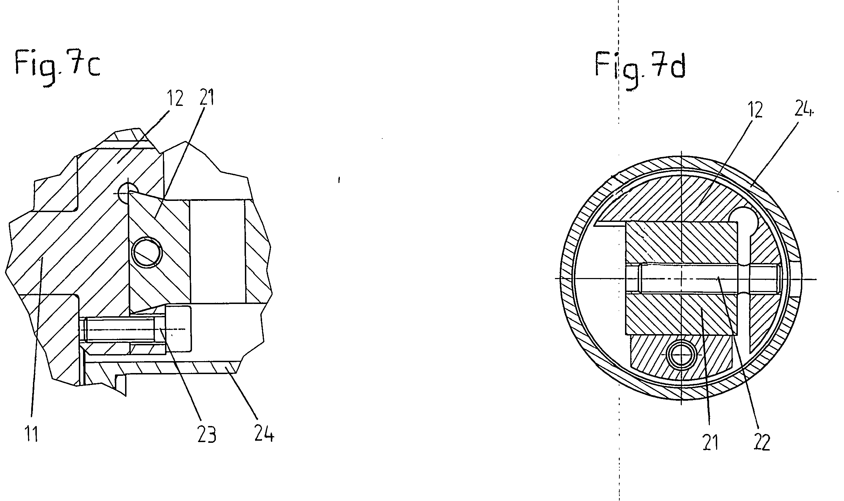

- Fig. 7 a: eine Schnittdarstellung eines entlang einer Schwalbenschwanzführung radial verstellbaren Entgratwerkzeughalters,
- Fig. 7 b: eine gegenüber Fig. 7 a um 90° gedrehte Schnittdarstellung,
- Fig. 7 c: eine Vergrößerung des in Fig. 7b umrandeten Bereichs,
- Fig. 7: d eine Schnittdarstellung entlang der C-C Linie von Fig. 7 b.

Die Figuren 1 a und 1 b zeigen ein Entgratsystem, das in einer Werkzeugmaschine eingespannt ist. Das Entgratsystem umfasst ein Entgratwerkzeug 1 und einen Entgratwerkzeugshalter 2. Das Entgratwerkzeug 1 ist in dem Entgratwerkzeughalter 2 befestigt. Im Ausführungsbeispiel ist das Entgratwerkzeug 1 als Entgratmesser ausgeführt. Das als Entgratmesser ausgeführte Entgratwerkzeug 1 umfasst im Ausführungsbeispiel einen zylinderförmigen, stabartigen Schneidenträger 25 an dessen vorderem Ende eine Schneide 14 angeordnet ist.

Der Entgratwerkzeughalter 2 ist in einer Spannzange 3 positioniert und wird mit einer Spannmutter 4 in einer Werkzeugaufnahme 5 fixiert. Das Entgratsystem rotiert um eine Drehachse 6. Der Entgratwerkzeughalter 2 ist von einer Hülse 24 umgeben. Durch den Spalt zwischen der Hülse 24 und dem Entgratwerkzeughalter 2 wird eine Flüssigkeit geleitetet, die als Spül- und Kühlmittel dient.

In den Figuren 2 a und 2 b ist ein Entgratwerkzeughalter 2 dargestellt. Der Entgratwerkzeughalter 2 weist einen vorderen Teil 7 zum Befestigen des Entgratwerkzeug 1 und einen hinteren Teil 8 zum Einspannen in die Werkzeugaufnahme 5 einer Werkzeugmaschine auf. An einer Befestigungsstelle 9 des vorderen Teils 7 wird das Entgratwerkzeug 1 positioniert und mit einer Feststellschraube fixiert, die in eine Öffnung 10 eingeschraubt wird. Die Befestungsstelle 9 ist exzentrisch zur Drehachse 6 angeordnet. Je stärker die Exzentrizität E ist, desto höher ist die Rückstellkraft des Entgratwerkzeugs 1 beim Eindringen in die Bohrung und demzufolge die Anpresskraft beim Entgraten.

Der hintere Teil 8 des Entgratwerkzeughalters 2 umfasst einen zylindrischen Schaft 11, an den sich ein quaderförmiger Bereich 12 anschließt. Der vordere Teil 7 wird zwischen zwei Federelementen 13 gehalten. Die Federelemente 13 verbinden den vorderen Teil 7 mit dem hinteren Teil 8 des Entgratwerkzeughalters 2.

Bei dem in den Figuren 2 a und 2 b dargestellten Ausführungsbeispiel ist der Entgratwerkzeughalter 2 einstückig ausgebildet. Der vordere Teil 7, der hintere Teil 8 und die Federelemente 13 sind aus einem Materialstück, vorzugsweise einem Kunststoff, gefertigt.

Die Federelemente 13 haben einen konstanten Rechteckquerschnitt und erstrecken sich in axialer Richtung parallel zur Drehachse 6. Die Federelemente 13 ermöglichen eine radiale Verschiebung des vorderen Teils 7 zum hinteren Teil 8. Da der hintere Teil 8 über seinen Schaft 11 fest eingespannt ist, werden bei radialer Verschiebung des vorderen Teils 7 beide Federelemente 13 auf Biegung beansprucht. Zwei parallel zueinander ausgerichtete Biegefedern bezeichnet man als Parallelfeder.

Durch Anordnung des vorderen Teils 7 zwischen einer Rechteck-Parallelfeder wird eine parallele Verschiebung ermöglicht. Die Figuren 1b und 7a zeigen, dass im Ausführungsbeispiel das Entgratwerkzeug 1 als Entgratmesser ausgeführt ist. Bei radialer Auslenkung behält das Entgratmesser seine axiale Ausrichtung, parallel zur Drehachse bei. Somit behält auch die Schneide 14 des Entgratmessers ihre Winkellage relativ zur Drehachse 6 bei.

Die Figuren 3 a und 3 b zeigen eine alternative Ausführungsform der Erfindung. Der vordere Teil 7 des Entgratwerkzeughalters 2 wird zwischen Federelementen 13 gehalten, die durch Biegung eines Streifens aus Federstahl geformt sind, so dass die einzelnen Federelemente 13 durch Bögen 15 zu einer Federung miteinander verbunden sind. Oberhalb und unterhalb des vorderen Teils 7 ist jeweils eine Federung mit drei parallel zueinander ausgerichteten plattenartigen Rechteck-Federelementen 13 angeordnet. Dadurch wird eine parallele Verschiebung des vorderen Teils 7 radial zur Drehachse 6 ermöglicht.

Der hintere Teil 8 des in den Figuren 3 a und 3 b dargestellten Entgratwerkzeughalters 2 besteht aus einem zylindrischen Schaft 11, zum Einspannen in eine Werkzeugmaschine, an den ein Bereich 12 in Form eines quaderförmiger Körpers angeformt ist.

Der in diesem Ausführungsbeispiel gezeigte Entgratwerkzeughalter 2 ist mehrteilig ausgeführt. Der vordere Teil 7 wird mit dem hinteren Teil 8 über die beiden äußeren Federelemente 13 verbunden. Diese sind bei dem in den Figuren 3 a und 3 b dargestellten Ausführungsbeispiel an zwei einander gegenüberliegenden Seiten des quaderförmigen Bereichs 12 angeschweißt.

Fig. 4 zeigt ein Entgratsystem, bei dem der vordere Teil 7 des Entgratwerkzeughalters 2 in seiner radialen Position verstellbar ist. Die Verstellanordnung 16 besteht aus einem verdrehbaren Verstellelement 17. Im Ausführungsbeispiel wird dazu eine Verstellschraube eingesetzt.

Zwischen dem Verstellelement 17 und dem vorderen Teil 7 ist ein Kraftübertragungselement 18 angeordnet, das im Ausführungsbeispiel als Druckfeder in Form einer Spiralfeder ausgebildet ist. Durch Verdrehung des Verstellelements 17 ändert sich die radiale Lage des vorderen Teils 7. Dadurch können der vordere Teil 7 und somit das Entgratwerkzeug 1 exzentrisch zur Drehachse 6 ausgerichtet werden. Dabei ist das Maß der Exzentrizität E variierbar. Je weiter das Verstellelement 17 hineingedreht wird, desto stärker ist die Exzentrizität E.

Die Figuren 5 a und 5 b zeigen eine alternative Verbindungsmöglichkeit des vorderen Teils 7 mit dem hinteren Teil 8. Die beiden verbindenden Federelemente 13 werden mit Hilfe eines Halteelementes 19 an zwei einander gegenüberliegenden Seiten des quaderförmigen Bereichs 12 befestigt. Als Halteelement 19 wird im Ausführungsbeispiel ein U-Profil eingesetzt, das zwei der Federelemente 13 umschließt und mittels zweier Schrauben 20 am quaderförmigen Bereich 12 des hinteren Teils 8 fixiert ist.

In den Figuren 6 a und 6 b ist eine einstückige Ausführung eines Entgratwerkzeughalters 2 dargestellt, bei der der vordere Teil 7 zwischen Federelementen 13 gehalten wird. Oberhalb und unterhalb des vorderen Teils 7 sind dabei jeweils mehrere Federelemente 13 angeordnet, die über Bögen 15 zu einer Federung verbunden sind. Die Äußeren der Federelemente 13 gehen in den quaderförmigen Bereich 12 des hinteren Teils 8 über. An den quaderförmigen Bereich 12 ist der Schaft 11 angeformt. Der gesamte Entgratwerkzeughalter 2, also der vordere Teil 7, der hintere Teil 8 und die Federelemente 13, sind aus einem Materialstück gefertigt.

Die Figuren 7a, 7b, 7c und 7d zeigen eine alternative Möglichkeit zur Veränderung der Exzentrizität. Der vordere Teil 7 ist mitsamt seinen Federelementen 13 entlang einer linearen Führungslinie verschiebbar. Dabei handelt es sich vorzugsweise um eine Gleitführung. Fig. 7c zeigt, dass die Gleitführung im Ausführungsbeispiel als Schwalbenschwanzführung ausgebildet ist. Alternativ könnte die Gleitführung jedoch auch als T-Nut-Führung ausgebildet sein.

Der vordere Teil 7 wird zwischen zwei Federelementen 13 gehalten. Die Federelemente 13 verbinden den vorderen Teil 7 mit einem Verschiebeelement 21. An einem Ende münden die beiden Federelemente 13 in das Verschiebeelement 21; am anderen Ende ist das Verschiebeelement 21 schwalbenschwanzförmig ausgebildet. Der quaderförmige Bereich 12 des hinteren Teils 8 weist gemäß Fig. 7c eine schwalbenschwanzförmige Nut auf, in der das Verschiebeelement 21 platziert ist. Mittels eines verdrehbaren Einstellelements 22 wird das Verschiebeelement 21 entlang einer linearen Führungslinie in der Nut in radialer Richtung verschoben. Bei dem Einstellelement 22 handelt es sich um eine Einstellschraube. Mit Blick auf Figur 7 a wird das Verschiebeelement 21 nach oben bzw. unten in seiner Position verschoben.

Mittels eines Fixierelements 23 wird das Verschiebeelement 21 in der gewünschten radialen Position arretiert. Als Fixierelement 23 wird ein Spannkeil mit Schraube eingesetzt.

Mit Blick auf Fig. 7d wird das Verschiebeelement 21 in horizontaler Richtung durch hinein- bzw. herausdrehen des Einstellelements 22 verschoben.

### Bezugszeichenliste:

- 1: Entgratwerkzeug
- 2: Entgratwerkzeughalter
- 3: Spannzange
- 4: Spannmutter
- 5: Werkzeugaufnahme
- 6: Drehachse
- 7: vorderer Teil
- 8: hinterer Teil
- 9: Befestigungsstelle
- 10: Öffnung
- 11: Schaft
- 12: quaderförmiger Bereich
- 13: Federelemente
- 14: Schneide
- 15: Bögen
- 16: Verstellanordnung
- 17: Verstellelement
- 18: Kraftübertragungselement
- 19: Halteelement
- 20: Schraube
- 21: Verschiebeelement
- 22: Einstellelement
- 23: Fixierelement
- 24: Hülse
- 25: Schneidenträger

## Patentansprüche

1. Entgratwerkzeughalter (2) mit einem vorderen Teil (7) zum Befestigen eines Entgratwerkzeugs (1) und einem hinteren Teil (8) zum Einspannen in eine Werkzeugmaschine, wobei der vordere Teil (7) zwischen mindestens zwei Federelementen (13) angeordnet ist,
wobei der vordere Teil (7) zwischen mindestens zwei Federelementen (13) gehalten wird, **dadurch gekennzeichnet, dass** die Federelemente (13) eine Verbindung zwischen dem vorderen Teil (7) und dem hinteren Teil (8) herstellen, zur Ermöglichung einer radialen Verschiebung des vorderen Teils (7) zum hinteren Teil (8),
wobei entweder die Befestigungsstelle (9) für das Entgratwerkzeug (1) exzentrisch zur Drehachse (6) angeordnet ist oder die radiale Position des vorderen Teils (7) mittels eines verdrehbaren Verstellelements (17) und/oder Einstellelements (22) veränderbar ist.

2. Entgratwerkzeughalter nach Anspruch 1, **dadurch gekennzeichnet, dass** die Federelemente (13) parallel zur Drehachse (6) angeordnet sind.

3. Entgratwerkzeughalter nach Anspruch 1 oder 2, **dadurch gekennzeichnet, dass** die Federelemente (13) einen konstanten Rechteckquerschnitt aufweisen.

4. Entgratwerkzeughalter nach einem der Ansprüche 1 bis 3, **dadurch gekennzeichnet, dass** der vordere Teil (7) zwischen einer Parallelfeder gehalten wird.

5. Entgratwerkzeughalter nach einem der Ansprüche 1 bis 3, **dadurch gekennzeichnet, dass** Federelemente (13) durch Bögen (15) zu einer Federung miteinander verbunden sind, wobei der vordere Teil (7) zwischen mindestens zwei Federungen gehalten wird.

6. Entgratwerkzeughalter nach einem der Ansprüche 1 bis 5, **dadurch gekennzeichnet, dass** der Entgratwerkzeughalter (2) einstückig ausgebildet ist.

7. Entgratwerkzeughalter nach Anspruch 1, **dadurch gekennzeichnet, dass** die Veränderung der radialen Position durch Verschiebung entlang einer linearen Führungslinie erfolgt.

8. Entgratwerkzeughalter nach Anspruch 7, **dadurch gekennzeichnet, dass** die Verschiebung entlang einer Gleitführung erfolgt.

9. Entgratsystem mit einem Entgratwerkzeug (1), das an einem Entgratwerkzeughalter (2) nach einem der Ansprüche 1 bis 8 befestigt ist.

10. Entgratsystem nach Anspruch 9, **dadurch gekennzeichnet, dass** das Entgratwerkzeug (1) als Entgratmesser ausbildet ist, wobei das Entgratmesser einen Schneidenträger (25) umfasst, an dessen vorderem Ende eine Schneide (14) angeordnet ist.

11. Entgratsystem nach Anspruch 10, **dadurch gekennzeichnet, dass** der Schneidenträger (25) und der Entgratwerkzeughalter (2) einstückig ausgebildet sind.

## Claims

1. Deburring-tool holder (2) having a front part (7) for fastening a deburring tool (1), and having a rear part (8) for clamping in a machine tool, wherein the front part (7) is arranged between at least two spring elements (13),
wherein the front part (7) is retained between at least two spring elements (13),
**characterized in that** the spring elements (13) establish a connection between the front part (7) and the rear part (8) in order to provide for radial displacement of the front part (7) in relation to the rear part (8),
wherein either the fastening location (9) for the deburring tool (1) is arranged eccentrically in relation to the axis of rotation (6) or the radial position of the front part (7) can be altered by means of a rotatable adjustment element (17) and/or setting element (22).

2. Deburring-tool holder according to Claim 1, **characterized in that** the spring elements (13) are arranged parallel to the axis of rotation (6).

3. Deburring-tool holder according to Claim 1 or 2, **characterized in that** the spring elements (13) have a constant rectangular cross section.

4. Deburring-tool holder according to one of Claims 1 to 3, **characterized in that** the front part (7) is retained between a parallel spring.

5. Deburring-tool holder according to one of Claims 1 to 3, **characterized in that** spring elements (13) are connected to one another by bent portions (15) to form a spring arrangement, wherein the front part (7) is retained between at least two spring arrangements.

6. Deburring-tool holder according to one of Claims 1 to 5, **characterized in that** the deburring-tool holder (2) is formed in one piece.

7. Deburring-tool holder according to Claim 1, **characterized in that** the radial position is altered by displacement along a linear guide line.

8. Deburring-tool holder according to Claim 7, **characterized in that** the displacement takes place along a sliding-action guide.

9. Deburring system having a deburring tool (1) fastened on a deburring-tool holder (2) according to one of Claims 1 to 8.

10. Deburring system according to Claim 9, **characterized in that** the deburring tool (1) is designed in the form of a deburring blade, wherein the deburring blade comprises a cutting-edge support (25), at the front end of which a cutting edge (14) is arranged.

11. Deburring system according to Claim 10, **characterized in that** the cutting-edge support (25) and the deburring-tool holder (2) are formed in one piece.

## Revendications

1. Support pour outil d'ébavurage (2) comprenant une partie avant (7) pour la fixation d'un outil d'ébavurage (1) et une partie arrière (8) pour le serrage dans une machine-outil, la partie avant (7) étant disposée entre au moins deux éléments de ressort (13),
la partie avant (7) étant retenue entre au moins deux éléments de ressort (13),
**caractérisé en ce que**
les éléments de ressort (13) établissent une liaison entre la partie avant (7) et la partie arrière (8) pour permettre un déplacement radial de la partie avant (7) par rapport à la partie arrière (8),
soit le point de fixation (9) pour l'outil d'ébavurage (1) étant disposé de manière excentrée par rapport à l'axe de rotation (6), soit la position radiale de la partie avant (7) pouvant être variée au moyen d'un élément de réglage rotatif (17) et/ou d'un élément d'ajustement rotatif (22).

2. Support pour outil d'ébavurage selon la revendication 1, **caractérisé en ce que** les éléments de ressort (13) sont disposés parallèlement à l'axe de rotation (6).

3. Support pour outil d'ébavurage selon la revendication 1 ou 2, **caractérisé en ce que** les éléments de ressort (13) présentent une section transversale rectangulaire constante.

4. Support pour outil d'ébavurage selon l'une quelconque des revendications 1 à 3, **caractérisé en ce que** la partie avant (7) est retenue entre un ressort parallèle.

5. Support pour outil d'ébavurage selon l'une quelconque des revendications 1 à 3, **caractérisé en ce que** des éléments de ressort (13) sont connectés les uns aux autres par des arcs (15) pour former une suspension, la partie avant (7) étant retenue entre au moins deux suspensions.

6. Support pour outil d'ébavurage selon l'une quelconque des revendications 1 à 5, **caractérisé en ce que** le support pour outil d'ébavurage (2) est réalisé d'une seule pièce.

7. Support pour outil d'ébavurage selon la revendication 1, **caractérisé en ce que** la variation de la position radiale s'effectue par déplacement le long d'une ligne de guidage linéaire.

8. Support pour outil d'ébavurage selon la revendication 7, **caractérisé en ce que** le déplacement s'effectue le long d'un guide coulissant.

9. Système d'ébavurage comprenant un outil d'ébavurage (1) qui est fixé à un support pour outil d'ébavurage (2) selon l'une quelconque des revendications 1 à 8.

10. Système d'ébavurage selon la revendication 9, **caractérisé en ce que** l'outil d'ébavurage (1) est réalisé sous forme de lame d'ébavurage, la lame d'ébavurage comprenant un support de coupe (25) à l'extrémité avant duquel est disposée une arête de coupe (14).

11. Système d'ébavurage selon la revendication 10, **caractérisé en ce que** le support de coupe (25) et le support pour outil d'ébavurage (2) sont réalisés d'une seule pièce.
